# EUROPEAN PATENT APPLICATION

(11) **EP 4 738 525 A1**
(43) Date of publication of application: **06.05.2026**
(21) Application number: 25205037.2
(22) Date of filing: 26.09.2025
(51) Int. Cl.: H01M 10/42, H01M 10/48, G01K 1/14

(54) **SENSING MODULE AND BATTERY MODULE INCLUDING THE SAME**

(30) Priority: 15.10.2024 KR 20240140089
(71) Applicant: SAMSUNG SDI CO., LTD., Yongin-si, Gyeonggi-do 17084 (KR)
(72) Inventor: AHN, Jae Pil, 16678 Suwon-si (KR); HONG, Su Been, 16678 Suwon-si (KR)
(74) Representative: Marks & Clerk LLP

(57) **Abstract**

A sensing module, including a busbar holder, a slot passing through the busbar holder in a first direction, a first substrate on the busbar holder, a second substrate extending from the first substrate toward the slot, a temperature sensor connected to the second substrate, a first protective member connected to the second substrate, the first protective member surrounding the temperature sensor, and a support member supporting the first protective member inside the slot.

## Description

### BACKGROUND

### 1. Field

The present disclosure relates to a sensing module and a battery module including the same.

### 2. Description of the Related Art

Secondary batteries are batteries that can be charged and discharged, unlike primary batteries that cannot be recharged. Low-capacity secondary batteries are used in portable small electronic devices such as smartphones, feature phones, laptop computers, digital cameras, and camcorders, while high-capacity secondary batteries are widely used as power sources for motor driving in hybrid vehicles, electric vehicles, and the like, and batteries for power storage. This secondary battery includes an electrode assembly composed of a positive electrode and a negative electrode, a case that accommodates the electrode assembly, and an electrode terminal connected to the electrode assembly.

The secondary batteries are being widely used for driving and energy storage not only in small devices such as portable electronic devices, but also in medium-to-large devices such as electric vehicles and energy storage systems (ESS). In particular, in the case of the medium-to-large devices, one battery module is configured in a form that multiple battery cells are electrically connected to each other to improve the output and capacity of the battery.

A sensing module for measuring the temperature and voltage of the battery cell in order to detect the risk of explosion due to overheating in advance and perform a protective operation may be mounted on such a battery module.

The above-described information disclosed in the technology that forms the background of the present disclosure is only intended to improve understanding of the background of the present disclosure, and thus may include information that does not constitute the related art.

### SUMMARY

The present disclosure is directed to providing a sensing module and a battery module including the same, which can stably fix a component and secure a space for circuit implementation.

According to an aspect, a sensing module, includes a busbar holder, a slot passing through the busbar holder in a first direction, a first substrate on, e.g. disposed on, the busbar holder, a second substrate extending from the first substrate toward the slot, a temperature sensor connected to the second substrate, a first protective member connected to the second substrate, the first protective member surrounding, e.g. disposed to surround, the temperature sensor, and a support member supporting the first protective member inside the slot.

The second substrate may include a mounting portion facing, e.g. disposed to face, the first substrate in a second direction intersecting the first direction, the mounting portion being inserted into the slot, and a connecting portion disposed between the first substrate and the mounting portion.

The connecting portion may include a first end portion connected to the first substrate, a second end portion spaced apart from the first end portion in the second direction, the second end portion being connected to the mounting portion, and at least one bending portion between, e.g. disposed between, the first end portion and the second end portion.

The bending portion may be bent around a third direction intersecting the first direction and the second direction.

The busbar holder may include a partition wall surrounding, e.g. disposed to surround, the slot, and the support member may include a hook protruding from the partition wall toward the slot.

The partition wall may extend from the busbar holder in a direction opposite to the first direction.

The busbar holder may further include an entry hole passing through the partition wall in the second direction, the connecting portion being inside, e.g. disposed inside, the entry hole.

The hook may include a first hook body connected to the partition wall, a second hook body extending from the first hook body, the second hook body being spaced apart from an inner surface of the partition wall, and a pressing portion at, e.g. disposed at, an end portion of the second hook body, the pressing portion pressing the first protective member in the first direction.

The second hook body may extend obliquely from the first hook body in the first direction.

A distance between the second hook body and the inner surface of the partition wall may increase toward the pressing portion.

A distance between the pressing portion and the inner surface of the partition wall may be greater than a distance between a perimetric surface of the first protective member and the inner surface of the partition wall.

The second hook body may be elastically deformable.

The first protective member may include a first surface, the pressing portion may be in contact with the first surface, and a second surface may be spaced apart from the first surface in the first direction, the second surface facing, e.g. disposed to face, the second substrate.

The first protective member may further include a concave groove in the first surface in the first direction, and the pressing portion may be in, e.g. insertable into, the groove.

The groove may pass through a perimetric surface of the first protective member intersecting, e.g. disposed to intersect, the first surface and the second surface.

The second surface may protrude outward from the mounting portion, and the support member may further include a stopper extending from the partition wall toward the slot, the stopper contacting the second surface.

The mounting portion may include a first mounting surface and a second mounting surface spaced apart from each other in the first direction, and the temperature sensor and the first protective member may be on, e.g. disposed on, the first mounting surface.

The sensing module may further include a second protective member on, e.g. disposed on, the second mounting surface, the second protective member supporting the mounting portion.

The sensing module may further include a first connecting wire connected to a first terminal of the temperature sensor, and a second connecting wire connected to a second terminal of the temperature sensor, and the first protective member may include a bypass wire connected to at least one of the first connecting wire and the second connecting wire.

According to an aspect a battery module includes a housing, a plurality of battery cells inside, e.g. disposed inside, the housing, and a sensing module inside the housing, the sensing module collecting operation information of one or more of the plurality of battery cells, wherein the sensing module includes a busbar holder facing, e.g. disposed to face, the battery cell, a slot passing through the busbar holder in a first direction, a first substrate on, e.g. disposed on, the busbar holder, a second substrate extending from the first substrate toward the slot, a temperature sensor connected to the second substrate, a first protective member connected to the second substrate, the first protective member surrounding, e.g. disposed to surround, the temperature sensor, and a support member supporting the first protection member inside the slot.

These and other aspects and features of the present disclosure will be described in or will be apparent from the following description of some embodiments of the present disclosure.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is an exploded perspective view schematically showing a configuration of a battery module according to one or more embodiments of the present disclosure;
FIG. 2 is a perspective view schematically showing a configuration of a battery cell according to one or more embodiments of the present disclosure;
FIG. 3 is a cross-sectional view schematically showing a configuration of the battery cell according to one or more embodiments of the present disclosure;
FIG. 4 is a perspective view schematically showing a configuration of a sensing module according to one or more embodiments of the present disclosure;
FIG. 5 is a cross-sectional perspective view schematically showing a configuration of the sensing module according to one or more embodiments of the present disclosure;
FIG. 6 is a bottom perspective view schematically showing a configuration of the sensing module according to one or more embodiments of the present disclosure;
FIG. 7 is a cross-sectional view taken along line 7-7' of FIG. 4;
FIG. 8 is a cross-sectional view taken along line 8-8' of FIG. 4;
FIG. 9 is a view schematically showing an electrical connection structure of a temperature sensor according to one or more embodiments of the present disclosure;
FIGS. 10 to 14 are views schematically showing an assembly process of a sensing module according to one or more embodiments of the present disclosure;
FIG. 15 is a view schematically showing an electrical connection structure of a temperature sensor according to another embodiment of the present disclosure; and
FIG. 16 is a view schematically showing a configuration of a stopper according to still another embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

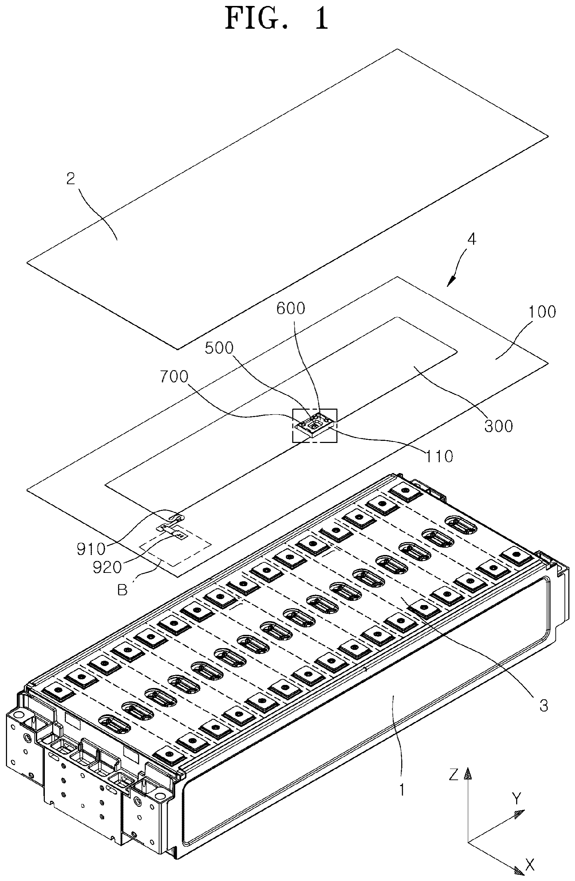

FIG. 1 is an exploded perspective view schematically showing a configuration of a battery module according to one or more embodiments of the present disclosure.

Referring to FIG. 1, the battery module according to the present embodiment includes a housing 1, a battery cell 3, and a sensing module 4.

The housing 1 may form an approximate exterior of the battery module and may entirely support the battery cell 3 and the sensing module 4 that are described below.

The housing 1 according to the present embodiment may be formed to have a shape of a box with an empty interior and an open upper side (based on the orientation shown in FIG. 1). A cross-sectional shape of the housing 1 may be variously changed in design according to the number and type of the battery cell 3 in addition to a quadrangular shape shown in FIG. 1.

A cover 2 that opens and closes an internal space of the housing 1 may be disposed on the open side of the housing 1. The cover 2 according to the present embodiment may be formed to have a shape of a flat plate disposed to face an upper surface of the housing 1. The cover 2 may be coupled to the housing 1 by various types of coupling methods such as welding, bolting, and the like.

The battery cell 3 may function as a unit structure storing and supplying power in the battery module.

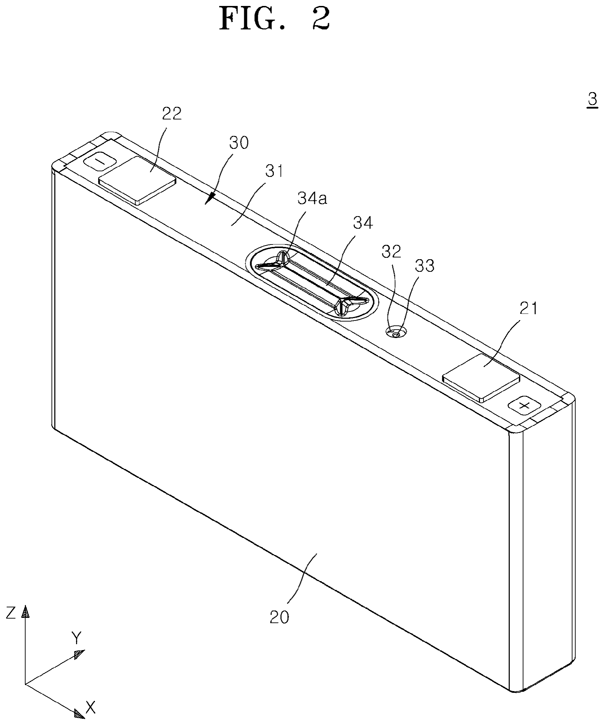

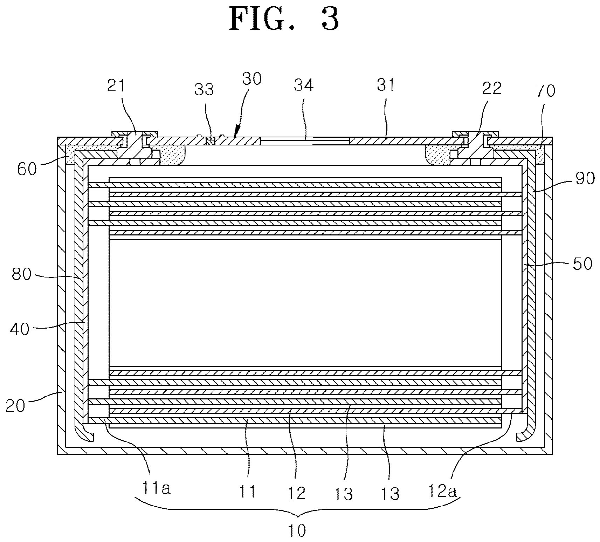

FIG. 2 is a perspective view schematically showing a configuration of a battery cell 3 according to one or more embodiments of the present disclosure, and FIG. 3 is a cross-sectional view schematically showing a configuration of the battery cell 3 according to one or more embodiments of the present disclosure.

Referring to FIGS. 2 and 3, the battery cell 3 may include at least one electrode assembly 10 wound with a separator 13, which is an insulator, interposed between a positive electrode 11 and a negative electrode 12, a case 20 in which the electrode assembly 10 is accommodated, and a cap assembly 30 coupled to an opening of the case 20.

Hereinafter, an example in which the battery cell 3 is a prismatic lithium-ion secondary battery will be described. However, the battery cell 3 may be another type of secondary battery, and the battery may be a lithium polymer battery or a cylindrical battery.

The electrode assembly 10 may have a roll shape in which the positive electrode 11 and the negative electrode 12 are wound with the separator 13, which is an insulator, interposed therebetween. However, the electrode assembly 10 may have a structure formed by alternately stacking a positive electrode and a negative electrode, which are made of a plurality of sheets, with a separator interposed therebetween.

The positive electrode 11 and the negative electrode 12 may each include a coated portion that is a region in which an active material is applied on a current collector (or substrate) formed of a thin metal foil and uncoated portions 11a, 12a that are regions in which the active material is not applied thereon.

The case 20 may form an overall exterior of the battery cell 3 and provide a space in which the electrode assembly 10 is accommodated. The case 20 according to the present embodiment may have a rectangular parallelepiped shape with an empty interior and one open side. The case 20 may be formed of a conductive metal such as aluminum, an aluminum alloy, or nickel-plated steel.

The cap assembly 30 may be coupled to the case 20 to seal the case 20.

The cap assembly 30 according to the present embodiment may include a cap plate 31 that covers the opening of the case 20. The cap plate 31 may be made of a conductive material. A positive electrode terminal 21 and a negative electrode terminal 22 that are electrically connected to the positive electrode 11 and the negative electrode 12, respectively, may be installed to protrude outward by passing through the cap plate 31.

Upper outer perimetric surfaces of the positive electrode terminal 21 and the negative electrode terminal 22 that protrude outward from the cap plate 31 may be subjected to screw-processing and fixed to the cap plate 31 with a nut.

However, in other embodiments, the positive electrode terminal 21 and the negative electrode terminal 22 may be made in a rivet structure and riveted, or coupled by being welded to the cap plate 31.

An electrolyte injection port 32 in which a sealing plug 33 may be installed may be formed in the cap plate 31.

A vent portion 34 having a notch 34a formed therein that performs an opening operation when the internal pressure of the case 20 increases may be installed in the cap plate 31.

The positive electrode terminal 21 and the negative electrode terminal 22 may be electrically connected to a first current collector 40 and a second current collector 50 that are joined to a positive electrode uncoated portion 11a and a negative electrode uncoated portion 12a, respectively, by welding.

For example, the positive electrode terminal 21 and the negative electrode terminal 22 may be coupled to the first current collector 40 and the second current collector 50, respectively, by welding. However, the positive electrode terminal 21 and the negative electrode terminal 22 may be formed to be integrally coupled with the first current collector 40 and the second current collector 50.

An insulating member may be installed between the electrode assembly 10 and the cap plate 31. Here, the insulating member may include a first insulating member 60 and a second insulating member 70 and each of the first insulating member 60 and the second insulating member 70 may be installed between the electrode assembly 10 and the cap plate 31.

According to the present embodiment, one end of a separating member that may be installed opposite to one side surface of the electrode assembly 10 may be installed between the insulating member, and the positive electrode terminal 21 and the negative electrode terminal 22. Here, the separating member may include a first separating member 80 and a second separating member 90.

One end of the first separating member 80 that may be installed opposite to one side surface of the electrode assembly 10 and one end of the second separating member 90 that may be installed opposite to another side surface of the electrode assembly 10, may be installed between the first insulating member 60 and the positive electrode terminal 21 and between the second insulating member 70 and the negative electrode terminal 22, respectively.

The positive electrode terminal 21 and the negative electrode terminal 22 that are coupled to the first current collector 40 and the second current collector 50, respectively, by welding may be coupled to one end of the first insulating member 60 and the first separating member 80 and one end of the second insulating member 70 and the second separating member 90, respectively.

The battery cell 3 may be disposed inside the housing 1. The battery cell 3 according to the present embodiment may be disposed inside the housing 1 so that the cap plate 31 faces the cover 2.

A plurality of battery cells 3 may be provided. The plurality of battery cells 3 may be disposed side by side inside the housing 1. For example, the plurality of battery cells 3 may be arranged in a direction parallel to a Y-axis with reference to FIG. 1. The number of battery cells 3 may be variously changed in design according to a size of the battery module, or the like.

The sensing module 4 may be disposed inside the housing 1 and may detect operation information of the battery cell 3. Here, the operation information of the battery cell 3 may include temperature information of the battery cell 3 and voltage information of the battery cell 3.

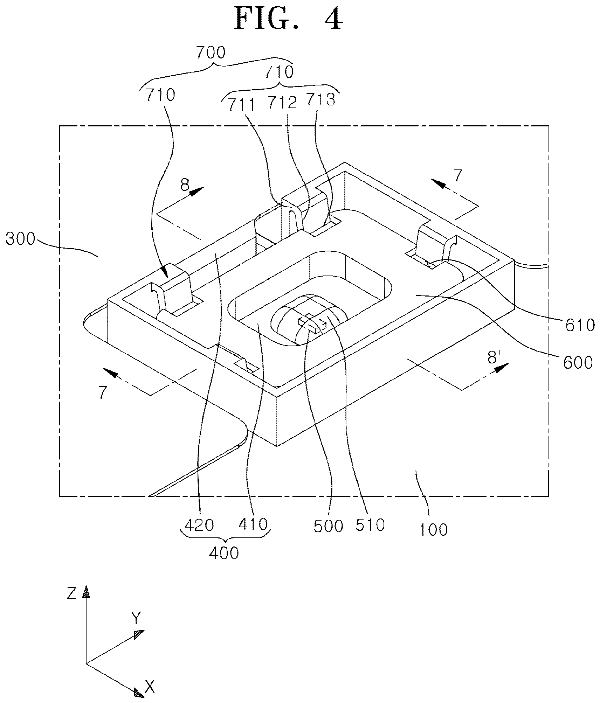

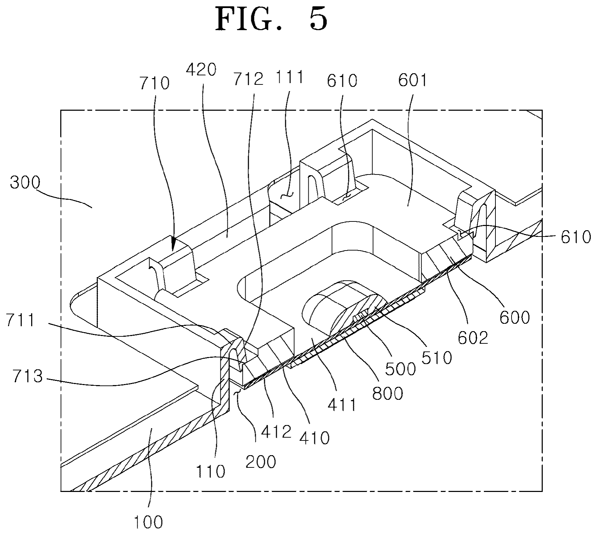

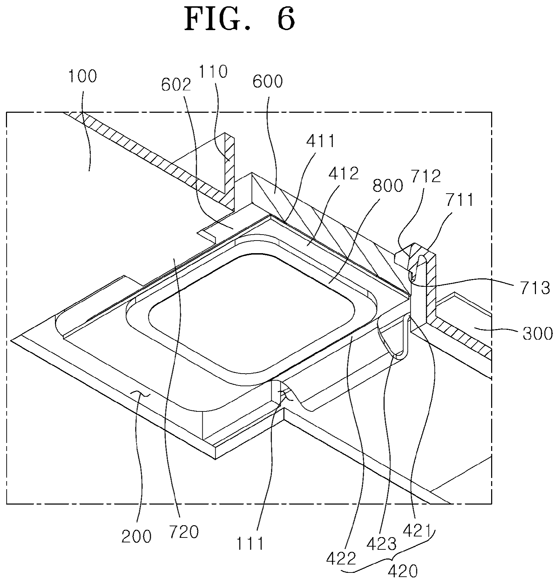

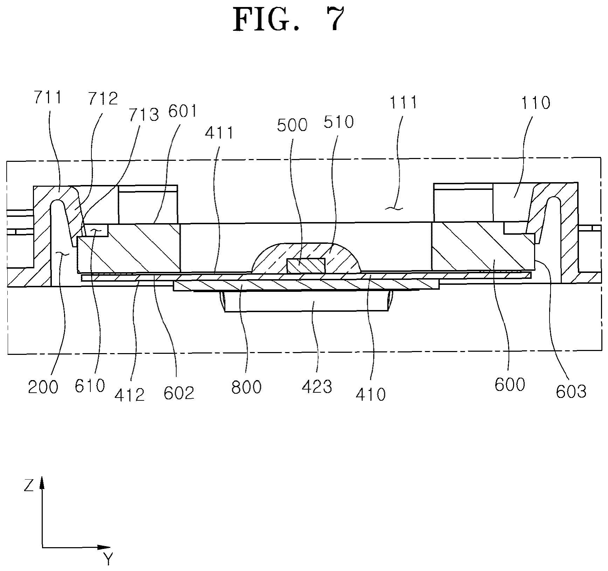

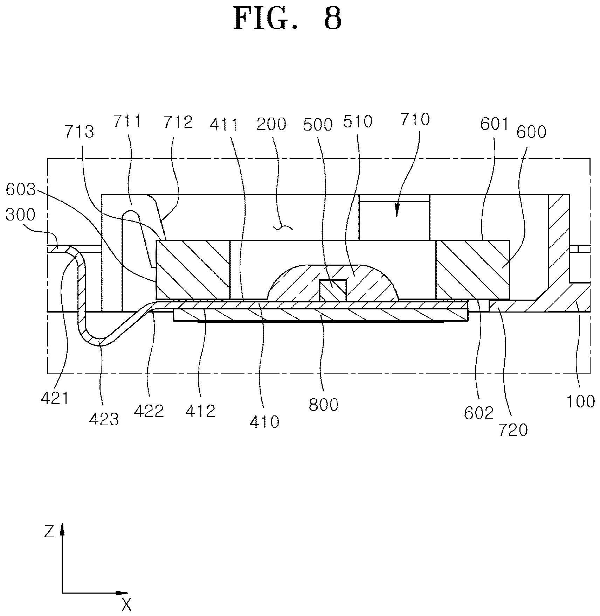

FIG. 4 is a perspective view schematically showing a configuration of a sensing module 4 according to one or more embodiments of the present disclosure, FIG. 5 is a cross-sectional perspective view schematically showing a configuration of the sensing module 4 according to one or more embodiments of the present disclosure, FIG. 6 is a bottom perspective view schematically showing a configuration of the sensing module 4 according to one or more embodiments of the present disclosure, FIG. 7 is a cross-sectional view taken along line 7-7' of FIG. 4, and FIG. 8 is a cross-sectional view taken along line 8-8' of FIG. 4.

Referring to FIGS. 1 to 8, the sensing module 4 includes a busbar holder 100 (see FIG. 5), a slot 200, a first substrate 300, a second substrate 400 (see FIG. 4), a temperature sensor 500, a first protective member 600, and a support member 700.

The busbar holder 100 may be disposed inside the housing 1 to face the battery cell 3. The busbar holder 100 may be formed to have a substantially flat plate shape. A lower surface of the busbar holder 100 may be disposed to face an upper surface of the battery cell 3, and more specifically, to face the positive electrode terminal 21 and the negative electrode terminal 22 of the battery cell 3.

An area of the busbar holder 100 may be larger than the sum of areas of the upper surfaces of the plurality of battery cells 3. The busbar holder 100 may be coupled to the housing 1 or the cover 2. A longitudinal direction of the busbar holder 100, as described below, may refer to a direction in which the plurality of battery cells 3 are arranged, that is, a direction parallel to the Y-axis based on FIG. 1, and a width direction of the busbar holder 100 may refer to a direction parallel to an X-axis based on FIG. 1.

A busbar B (see FIG. 1) that electrically interconnects the plurality of battery cells 3 may be installed in the busbar holder 100.

The busbar B according to the present embodiment may be exemplified as various types of connecting units that can be electrically connected to the battery cell 3. The busbar B may be made of an electrically conductive material such as aluminum, nickel, or copper. The busbar B may be connected to the positive electrode terminal 21 or the negative electrode terminal 22 of the battery cell 3 by welding or the like. FIG. 1 shows an example in which the busbar B is singly formed, but a plurality of busbars B may be formed. In this case, the plurality of busbars B may have various numbers and arrangement forms according to the number of battery cells 3, series and parallel structures among the plurality of battery cells 3, etc.

The slot 200 may form a contact path between the battery cell 3 and the temperature sensor 500 described below, in the busbar holder 100.

The slot 200 (see FIGS. 5 and 6) according to the present embodiment may have a form of a hole passing through the busbar holder 100 in a first direction. Here, the first direction may refer to a direction parallel to a Z-axis based on FIGS. 1 and 4 and from an upper side toward a lower side. A cross-sectional shape of the slot 200 may be designed to have various shapes such as a circular shape, an elliptical shape, and a polygonal shape in addition to a quadrangular shape shown in FIG. 5. The slot 200 may be disposed to face the upper surface of any one of the plurality of battery cells 3 and more specifically, the cap plate 31 in the first direction.

FIG. 1 shows an example in which the slot 200 is singly formed, but a plurality of slots 200 may be provided. In this case, each of the slots 200 may be disposed to individually face one of the upper surfaces of different battery cells 3. The number of slots 200 may be less than the number of battery cells 3 or equal to the number of battery cells 3.

The busbar holder 100 according to the present embodiment may include a partition wall 110.

The partition wall 110 according to the present embodiment may refer to a partial region, which is disposed to surround a perimetric surface of the slot 200, of the entire region of the busbar holder 100. Accordingly, in the present embodiment, the slot 200 may refer to an internal space of the partition wall 110, which is surrounded by an inner surface of the partition wall 110. The partition wall 110 may extend a predetermined distance in a direction opposite to the first direction from an upper surface of the busbar holder 100, that is, upward based on FIG. 4. A cross-sectional shape of the partition wall 110 may be other than the quadrangular shape shown in FIG. 4 and may be designed to have various shapes according to the cross-sectional shape of the slot 200.

The first substrate 300 (see FIG. 1) may be seated on the upper surface of the busbar holder 100. The first substrate 300 may be a flexible circuit board including a conductive pattern for current flow and a flexible insulating film for insulating the conductive pattern. In some examples, the flexible circuit board may be referred to as a flexible printed circuit assembly (FPCA) or a flexible printed circuit board (FPCB).

An area of the first substrate 300 may be smaller than the area of the busbar holder 100. The first substrate 300 may be disposed so that its longitudinal direction is parallel to the longitudinal direction of the busbar holder 100, that is, an arrangement direction of the plurality of battery cells 3. For example, the first substrate 300 may be disposed so that its longitudinal direction is parallel to the Y-axis direction based on FIG. 1. The first substrate 300 may be fixed to the upper surface of the busbar holder 100 by various types of fixing units such as an adhesive, a double-sided tape, a bolt, or a hook. The first substrate 300 may be connected to an external control system such as a battery management system (BMS) via a separate connector, etc.

The second substrate 400 (see FIG. 4) may extend from the first substrate 300 toward the slot 200. The second substrate 400, like the first substrate 300, may be a flexible circuit board including a conductive pattern for current flow and a flexible insulating film for insulating the conductive pattern. The second substrate 400 may be integrally formed with the first substrate 300, or alternatively, may also be connected to the first substrate 300 after being separately manufactured from the first substrate 300.

FIG. 1 shows an example in which the second substrate 400 is singly formed, but a plurality of second substrates 400 may be provided. In this case, the number of second substrates 400 may be equal to the number of slots 200. Each of the second substrates 400 may individually extend from the first substrate 300 toward one of different slots 200.

The second substrate 400 according to the present embodiment may include a mounting portion 410 and a connecting portion 420.

The mounting portion 410 (see FIG. 8) may form one side exterior of the second substrate 400 and may provide a mounting space for the temperature sensor 500 described below.

The mounting portion 410 according to the present embodiment may be disposed to face the first substrate 300 in a second direction. Here, the second direction may be a direction that intersects the first direction and a direction that is parallel to the X-axis direction based on FIG. 4 and is from the first substrate 300 toward the slot 200. The mounting portion 410 may be disposed inside the slot 200. An area of the mounting portion 410 perpendicular to the first direction may be smaller than an area of the slot 200 perpendicular to the first direction. The mounting portion 410 may be inserted from the outside of the busbar holder 100 into the inside of the slot 200 in the first direction.

The mounting portion 410 may include a first mounting surface 411 (see FIG. 8) and a second mounting surface 412 that are spaced apart in the first direction. The first mounting surface 411 and the second mounting surface 412 according to the present embodiment may refer to both surfaces of the mounting portion 410 perpendicular to the first direction. The first mounting surface 411 may be an upper surface of the mounting portion 410 disposed in the direction opposite to the first direction, that is, upward, and the second mounting surface 412 may be a lower surface of the mounting portion 410 disposed toward the first direction. The second mounting surface 412 may be disposed to face the upper surface of the battery cell 3, that is, the cap plate 31.

The connecting portion 420 may be disposed between the first substrate 300 and the mounting portion 410. The connecting portion 420 may electrically and mechanically connect the first substrate 300 to the mounting portion 410.

The connecting portion 420 may pass through the partition wall 110 (see FIG. 6).

For example, an entry hole 111 may be formed in the partition wall 110 disposed between the first substrate 300 and the mounting portion 410. The entry hole 111 may have a shape of a hole passing through the partition wall 110 disposed between the first substrate 300 and the mounting portion 410 in the second direction. The entry hole 111 may be connected to the slot 200.

The connecting portion 420 according to the present embodiment may be disposed inside the entry hole 111. Both sides of the connecting portion 420 may extend in opposite directions with respect to the entry hole 111 and may be connected to the first substrate 300 and the mounting portion 410, respectively. Accordingly, the entry hole 111 can prevent the connecting portion 420 from interfering with the partition wall 110 during the installation process of the temperature sensor 500 (see FIG. 4).

The connecting portion 420 according to the present embodiment may include a first end portion 421, a second end portion 422, and a bending portion 423 (see FIG. 6).

The first end portion 421 may be a region of one end portion of the connecting portion 420, which is connected to the first substrate 300, of the entire region of the connecting portion 420. In some embodiments, the first end portion 421 may be integrally formed with the first substrate 300 or, in other embodiments, may be connected to the first substrate 300 by various coupling methods such as welding, fitting, and the like.

The second end portion 422 may be a region of the other end portion of the connecting portion 420, which is connected to the mounting portion 410, of the entire region of the connecting portion 420. The second end portion 422 may be spaced a predetermined distance apart from the first end portion 421 in the second direction. A distance between the first end portion 421 and the second end portion 422 may be equal to a distance between the first substrate 300 and the mounting portion 410. In some embodiments, the first end portion 421 may be integrally formed with the mounting portion 410 or, in other embodiments, may be connected to the mounting portion 410 by various coupling methods such as welding, fitting, and the like.

The bending portion 423 may refer to a central region of the connecting portion 420 located between the first end portion 421 and the second end portion 422.

The bending portion 423 according to the present embodiment may have a curved shape extending from the first end portion 421 toward the second end portion 422 with a predetermined curvature. The curvature of the bending portion 423 may vary depending on a change in distance between the first substrate 300 and the mounting portion 410. Accordingly, when the distance between the first substrate 300 and the mounting portion 410 changes, the bending portion 423 can prevent damage to the connecting portion 420 by absorbing tension applied to the connecting portion 420 by its own change in curvature.

The bending portion 423 may have a shape bent around a third direction. Here, the third direction may refer to a direction intersecting the first direction and the second direction and a direction parallel to the Y-axis direction based on FIGS. 4 and 7. That is, the bending portion 423 may have a curved shape having a radius of curvature of a predetermined length with respect to a straight line parallel to the third direction. Accordingly, by relatively reducing an area of the connecting portion 420 parallel to the first substrate 300, the bending portion 423 can increase a component mounting area of the first substrate 300 and increase the degree of freedom in circuit design of the first substrate 300.

FIGS. 6 and 8 show an example in which the bending portion 423 is singly formed, but a plurality of bending portions 423 may be provided. In this case, the plurality of bending portions 423 may be arranged between the first end portion 421 and the second end portion 422 in the second direction.

The temperature sensor 500 may be connected to the second substrate 400 and may detect a temperature of the battery cell 3.

The temperature sensor 500 according to the present embodiment may include a thermistor that measures a temperature by using characteristics in which resistance increases or decreases according to temperature such as a positive temperature coefficient thermistor (PTC) or a negative temperature coefficient thermistor (NTC).

The temperature sensor 500 may be disposed on the first mounting surface 411 of the mounting portion 410.

The temperature sensor 500 may be electrically connected to the first substrate 300 and the second substrate 400.

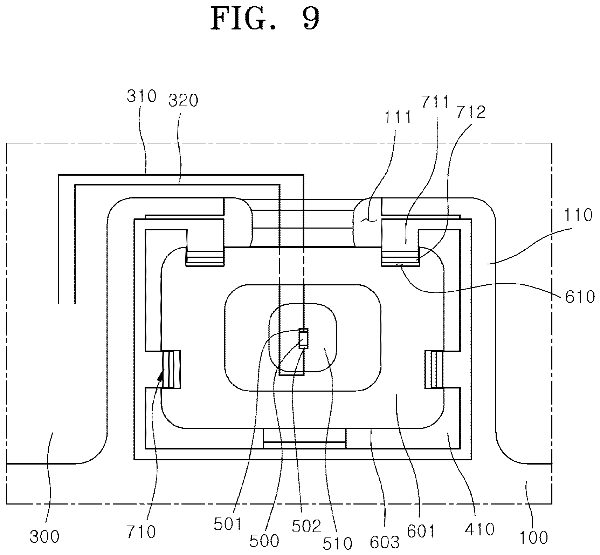

FIG. 9 is a view schematically showing an electrical connection structure of a temperature sensor according to one or more embodiments of the present disclosure.

Referring to FIGS. 1 to 9, the temperature sensor 500 may include a first terminal 501 and a second terminal 502. One of the first terminal 501 and the second terminal 502 may be an input terminal of the temperature sensor 500 and the other of the first terminal 501 and the second terminal 502 may be an output terminal of the temperature sensor 500. Hereinafter, an example in which the first terminal 501 is the input terminal of the temperature sensor 500 and the second terminal 502 is the output terminal of the temperature sensor 500 will be described.

The first terminal 501 of the temperature sensor 500 may be connected to a first connecting wire 310 and the second terminal 502 of the temperature sensor 500 may be connected to a second connecting wire 320. The first connecting wire 310 and the second connecting wire 320 may be different conductive patterns formed inside the first substrate 300 and the second substrate 400.

The first connecting wire 310 according to the present embodiment may continuously extend inside the first substrate 300, the connecting portion 420, and the mounting portion 410. The first connecting wire 310 may provide a continuous electrical connection path that is connected to the first terminal 501 sequentially through the first substrate 300, the connecting portion 420, and the mounting portion 410.

The second connecting wire 320 according to the present embodiment may continuously extend inside the first substrate 300, the connecting portion 420, and the mounting portion 410. The second connecting wire 320 may be separated from the first connecting wire 310. The second connecting wire 320 may provide a continuous electrical connection path that sequentially passes through the mounting portion 410, the connecting portion 420, and the first substrate 300 from the second terminal 502.

The first connecting wire 310 and the second connecting wire 320 may be connected to a battery management system (BMS) through the first substrate 300. Accordingly, a detection signal detected from the temperature sensor 500 may be transmitted to the first substrate 300 via the second substrate 400 and transmitted to the BMS through the first substrate 300.

A coating layer 510 may be disposed at an outer side of the temperature sensor 500. The coating layer 510 may be disposed to surround the temperature sensor 500 and may protect the temperature sensor 500 from external moisture, a foreign substance, an impact, etc. The coating layer 510 may be formed to have a substantially dome shape and disposed to entirely cover an upper space of the temperature sensor 500. The coating layer 510 may be made of a material such as an epoxy resin, acrylic, polyurethane, silicon, or parylene to completely seal the temperature sensor 500 from the external space. The coating layer 510 may be applied onto the temperature sensor 500 by a method such as spraying or dip coating.

The first protective member 600 may be connected to the second substrate 400 and disposed to entirely surround a peripheral region of the temperature sensor 500. The first protective member 600 may function as a configuration that protects the temperature sensor 500 from an external impact and interference with an adjacent component.

The first protective member 600 according to the present embodiment may be disposed on the first mounting surface 411 of the mounting portion 410. The first protective member 600 may have a ring shape with a hollow formed in its central portion. The temperature sensor 500 may be disposed inside the hollow of the first protective member 600. An inner surface of the first protective member 600 may be disposed to be spaced a predetermined distance apart from the temperature sensor 500 and to face the temperature sensor 500.

The first protective member 600 may include a first surface 601 and a second surface 602 that are spaced apart from each other in the first direction.

The first surface 601 and the second surface 602 according to the present embodiment may refer to both surfaces of the first protective member 600 perpendicular to the first direction. The first surface 601 may be an upper surface of the first protective member 600 disposed in the direction opposite to the first direction, that is, upward, and the second surface 602 may be a lower surface of the first protective member 600 disposed toward the first direction.

The second surface 602 may be disposed to face the first mounting surface 411. The second surface 602 may be fixed to the first mounting surface 411 by welding, soldering, etc. An area of the second surface 602 may be greater than the area of the first mounting surface 411. Accordingly, a portion of the second surface 602 may extend or protrude outward from the first mounting surface 411 in a direction perpendicular to the first direction.

A height of the first protective member 600, that is, a distance between the first surface 601 and the second surface 602 may be greater than a height of each of the temperature sensor 500 and the coating layer 510. Accordingly, the first protective member 600 can reduce a thickness of the coating layer 510 and simplify the manufacturing process of the coating layer 510 by blocking a path through which an external foreign substance or an adjacent component directly come into contact with the temperature sensor 500. The area of each of the first surface 601 and the second surface 602 may be smaller than the area of the slot 200.

The first protective member 600 may further include a perimetric surface 603 perpendicular to the first surface 601 and the second surface 602. The perimetric surface 603 of the first protective member 600 may be disposed to be spaced a predetermined distance apart from the inner surface of the partition wall 110.

The support member 700 may be provided in the busbar holder 100 and may support the first protective member 600 inside the slot 200. That is, the support member 700 may function as a configuration that prevents the mounting portion 410, the temperature sensor 500, and the first protective member 600 from being detached from the slot 200 or the mounting portion 410, the temperature sensor 500, and the first protective member 600 from moving inside the slot 200 due to external vibrations, etc. Accordingly, the support member 700 may secure reliability for the temperature data of the battery cell 3 detected from the temperature sensor 500.

The support member 700 according to the present embodiment may include a hook 710 (see FIG. 4).

The hook 710 may protrude from the partition wall 110 toward the slot 200. The hook 710 may guide the first protective member 600 to be inserted into the slot 200 in the first direction. After the insertion of the first protective member 600 is completed, the hook 710 may be fastened with the first protective member 600 and may restrict the first protective member 600 from moving inside the slot 200 in the direction opposite to the first direction.

A plurality of hooks 710 may be provided. The plurality of hooks 710 may be arranged at set intervals along the inner surface of the partition wall 110. The number of hooks 710 may be variously changed in design according to an area of the first protective member 600, etc.

The hook 710 according to the present embodiment may include a first hook body 711, a second hook body 712, and a pressing portion 713.

The first hook body 711 may be connected to the partition wall 110 and may overall support the second hook body 712 and the pressing portion 713.

The first hook body 711 according to the present embodiment may extend from the inner surface of the partition wall 110 toward a central portion of the slot 200. For example, the first hook body 711 may have a shape of a rod extending in the direction perpendicular to the first direction. The first hook body 711 may be disposed at an upper end portion of the partition wall 110 (in the orientation shown). An extending direction of the first hook body 711 may be parallel to the second direction or the third direction within a range perpendicular to the first direction depending on a position of the hook 710 and may also be disposed to be inclined with respect to the second direction and the third direction. An extending length of the first hook body 711 may be variously changed in design within a range in which the first hook body 711 does not come into direct contact with the first protective member 600 when the first protective member 600 is inserted into the slot 200 in the first direction.

The second hook body 712 may extend from the first hook body 711 and may be spaced apart from the inner surface of the partition wall 110 to which the first hook body 711 is connected (see FIG. 5). The second hook body 712 may function as a configuration that guides an operation of the first protective member 600 being inserted into the slot 200. Hereinafter, with respect to one of the hooks 710, the inner surface of the partition wall 110 may refer to an inner surface of the partition wall 110, to which the first hook body 711 is connected, of the entire region of the inner surface of the partition wall 110.

The second hook body 712 according to the present embodiment may extend obliquely from an end portion of the first hook body 711 with respect to the first direction. An inner surface of the second hook body 712 may be disposed to be spaced apart from and face the inner surface of the partition wall 110 to which the first hook body 711 is connected. A distance between the inner surface of the second hook body 712 and the inner surface of the partition wall 110 may increase toward an end portion of the second hook body 712, that is, toward the pressing portion 713 described below. Accordingly, the second hook body 712 may have a shape that obliquely extends from the first hook body 711 toward the central portion of the slot 200 in the first direction.

When the first protective member 600 is inserted into the slot 200, an outer surface of the second hook body 712 may come into contact with the perimetric surface 603 of the first protective member 600. The second hook body 712 may be provided to be elastically deformed. As the outer surface of the second hook body 712 comes into contact with the perimetric surface 603 of the first protective member 600, the second hook body 712 may be elastically deformed toward the inner surface of the partition wall 110 to which the first hook body 711 is connected with respect to the first hook body 711. Accordingly, the first protective member 600 may be smoothly inserted into the slot 200, and a constant distance between the first protective member 600 and the partition wall 110 may be maintained during the insertion process into the slot 200 by the elastic strength of the second hook body 712.

The pressing portion 713 may be disposed at the end of the second hook body 712 and may press the first protective member 600 in the first direction. The pressing portion 713 may function as a configuration that restricts the movement of the first protective member 600 in the direction opposite to the first direction (e.g., -X-axis direction) after the first protective member 600 is completely inserted into the slot 200.

The pressing portion 713 according to the present embodiment may form an exterior of an end region of the second hook body 712 protruding toward an inner side of the slot 200. The pressing portion 713 may be integrally formed with the second hook body 712. The pressing portion 713 may also be coupled to the second hook body 712 after being separately manufactured from the second hook body 712.

As the first protective member 600 is completely inserted into the slot 200, the pressing portion 713 may come into contact with the first surface 601 of the first protective member 600. The pressing portion 713 may press the first surface 601 of the first protective member 600 in the first direction by the elastic strength of the second hook body 712.

The first protective member 600 according to the present embodiment may include a groove 610 (see FIGS. 4, 5 and 9). The groove 610 may have a shape of a recess concavely recessed from the first surface 601 of the first protective member 600 in the first direction. A side surface of the groove 610 may pass through the perimetric surface 603 of the first protective member 600. A plurality of grooves 610 may be provided. The number of grooves 610 may be equal to the number of hooks 710. Each groove 610 may be individually disposed at a position that faces one of the different hooks 710.

The pressing portion 713 according to the present embodiment may be inserted into the groove 610. Accordingly, the sensing module 4 according to the present embodiment may prevent the pressing portion 713 from relatively moving with respect to the first surface 601 due to external vibrations, etc. and may prevent a pressing position of the pressing portion 713 with respect to the first surface 601 from being arbitrarily changed.

The pressing portion 713 may have a cross-section of a substantially stepped shape. Accordingly, when the pressing portion 713 is inserted into the groove 610, one surface of the pressing portion 713 may come into contact with a bottom surface of the groove 610 and the other surface of the pressing portion 713 may come into contact with the perimetric surface 603 of the first protective member 600.

The support member 700 according to the present embodiment may further include a stopper 720 (see FIG. 6).

The stopper 720 may be spaced apart from the hook 710 and may restrict the first protective member 600 from being inserted by a predetermined distance or more in the first direction inside the slot 200. Accordingly, the stopper 720 may prevent the first protective member 600 from being detached from the slot 200 due to the pressing force of the hook 710 before the sensing module 4 is seated on the battery cell 3.

The stopper 720 according to the present embodiment may extend from the inner surface of the partition wall 110 toward the slot 200. The stopper 720 may be spaced apart from the hook 710 in the first direction. For example, the hook 710 may be disposed at the upper end portion of the partition wall 110 and the stopper 720 may be disposed at the lower end portion of the partition wall 110. An upper surface of the stopper 720 may come into contact with the second surface 602 of the first protective member 600 that protrudes outward from the mounting portion 410. The stopper 720 may be disposed at a position that faces the connecting portion 420 and the entry hole 111 in the second direction.

The sensing module 4 according to the present embodiment may further include a second protective member 800.

The second protective member 800 may be disposed on the second mounting surface 412 of the mounting portion 410. The second protective member 800 may protect the temperature sensor 500 from an external impact and interference with an adjacent component on the second mounting surface 412. The second protective member 800 may structurally support the mounting portion 410 through its own rigidity during a process in which the temperature sensor 500 is mounted on the first mounting surface 411 of the mounting portion 410.

The second protective member 800 according to the present embodiment may be formed to have a substantially flat plate shape. The second protective member 800 may be disposed to face the first protective member 600 with the second substrate 400 interposed therebetween. An upper surface of the second protective member 800 may be fixed to the second mounting surface 412 by various coupling methods such as welding, bolting, and the like.

When the second surface 602 of the first protective member 600 is in contact with the stopper 720, the second protective member 800 may protrude downward from the slot 200. A lower surface of the second protective member 800 may come into contact with the cap plate 31 of the battery cell 3. The second protective member 800 may be fixed to the cap plate 31 of the battery cell 3 by an adhesive or the like.

The second protective member 800 may be made of a metal material with high thermal conductivity and rigidity such as aluminum, nickel, and the like. Accordingly, the second protective member 800 may function as a configuration that transfers heat generated from the battery cell 3 to the temperature sensor 500.

The sensing module 4 according to the present embodiment may further include a third substrate 910 and a voltage sensor 920 (see FIG. 1).

The third substrate 910 may extend from the first substrate 300 toward the busbar B. Like the first substrate 300, the third substrate 910 may be a flexible circuit board including a conductive pattern for current flow and a flexible insulating film for insulating the conductive pattern. The third substrate 910 may be integrally formed with the first substrate 300, or alternatively, may also be connected to the first substrate 300 after being separately manufactured from the first substrate 300.

FIG. 1 shows an example in which the third substrate 910 is singly formed, but a plurality of third substrates 910 may also be provided.

The voltage sensor 920 may be connected to the third substrate 910 and may detect a voltage of the battery cell 3.

The voltage sensor 920 according to the present embodiment may have a plate shape made of a metal material such as aluminum, nickel, and copper. The voltage sensor 920 may be connected to a conductive pattern of the third substrate 910 by soldering or the like. The voltage sensor 920 may be mechanically and electrically connected to the busbar B by laser welding, ultrasonic welding, or the like. The voltage sensor 920 may be connected to the battery management system (BMS). Accordingly, a detection signal detected from the voltage sensor 920 may be transmitted to the first substrate 300 via the third substrate 910 and transmitted to the BMS through the first substrate 300.

Hereinafter, an assembly process of the sensing module 4 according to one or more embodiments of the present disclosure will be described.

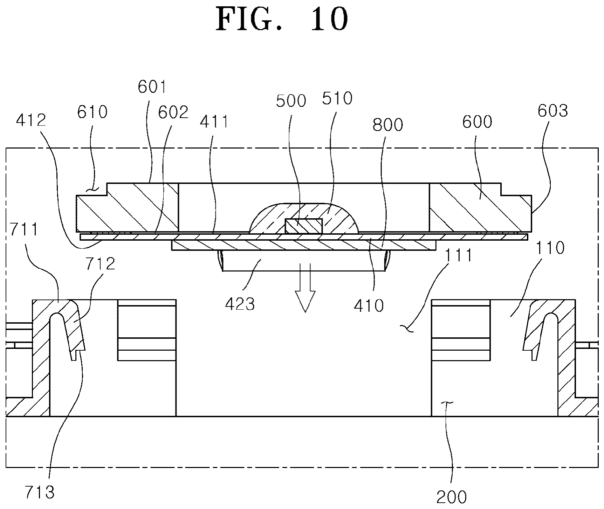

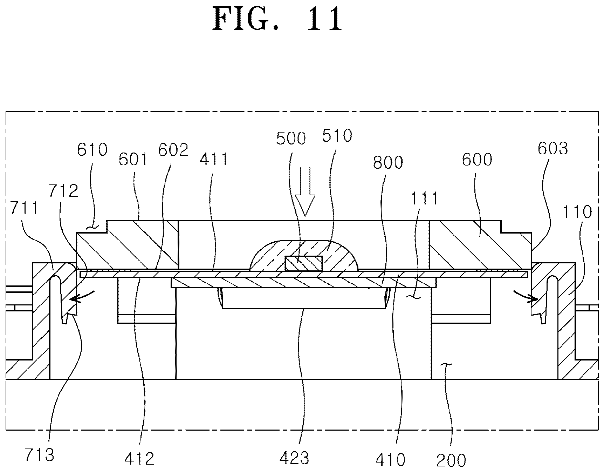

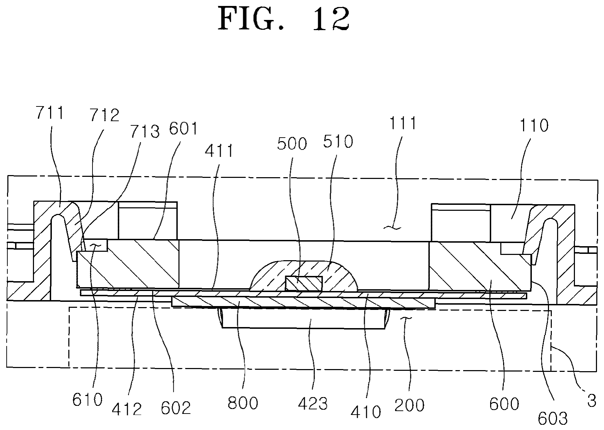

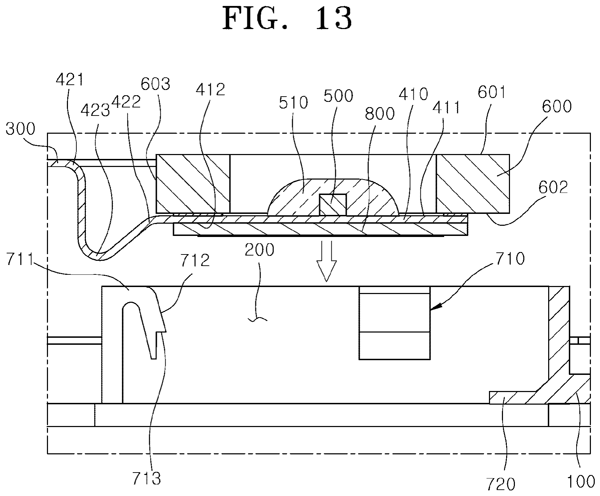

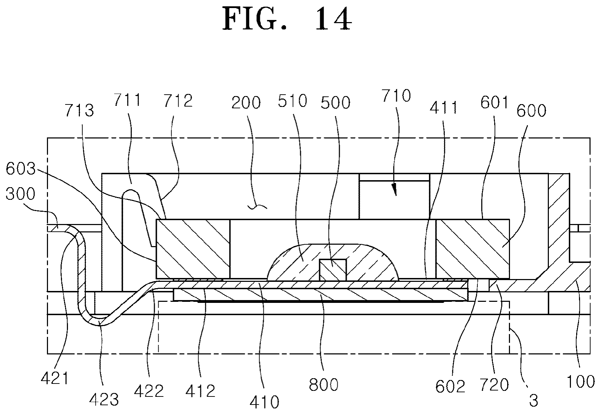

FIGS. 10 to 14 are views schematically showing an assembly process of a sensing module according to one or more embodiments of the present disclosure.

Referring to FIGS. 10 to 14, after the temperature sensor 500 and the first protective member 600 are mounted on the first mounting surface 411 of the mounting portion 410, the mounting portion 410 may be disposed to face an upper end portion of the slot 200.

The mounting portion 410 may be inserted into the slot 200 in the first direction along with the temperature sensor 500, the first protective member 600, and the second protective member 800.

In this process, the perimetric surface 603 of the first protective member 600 may come into contact with the outer surface of the second hook body 712 and the second hook body 712 may be elastically deformed toward the inner surface of the partition wall 110 to which the first hook body 711 is connected.

As the first protective member 600 moves by a predetermined distance or more in the first direction in a state in which the perimetric surface 603 of the first protective member 600 is in contact with the outer surface of the second hook body 712, the second hook body 712 may be separated from the perimetric surface 603 of the first protective member 600.

Thereafter, the second hook body 712 may be restored toward the central portion of the slot 200 from the inner surface of the partition wall 110 by its own elastic restoring strength and the pressing portion 713 disposed at the end portion of the second hook body 712 may be inserted into the groove 610 formed on the first surface 601 of the first protective member 600.

As the first protective member 600 moves by a predetermined distance in the first direction, the second surface 602 of the first protective member 600 may come into contact with the upper surface of the stopper 720.

When the second surface 602 of the first protective member 600 comes into contact with the stopper 720, the second protective member 800 may come into contact with the cap plate 31 of the battery cell 3.

The second protective member 800 may be maintained in close contact with the cap plate 31 of the battery cell 3 by the pressing force applied by the hook 710 to the first protective member 600 in the first direction.

Hereinafter, a sensing module 4 according to another embodiment of the present disclosure will be described.

The sensing module 4 according to the present embodiment may be configured to differ only in an electrical connection structure of the temperature sensor 500 from the sensing module 4 according to one or more embodiments of the present disclosure described based on FIGS. 1 to 14 of the present disclosure. Accordingly, in describing the sensing module 4 according to the present embodiment, only the electrical connection structure of the temperature sensor 500, which differs from that of the sensing module 4 according to one or more embodiments of the present disclosure, will be described. The description of the sensing module 4 according to one or more embodiments of the present disclosure may be applied as is to the remaining configuration of the sensing module 4 according to the present embodiment.

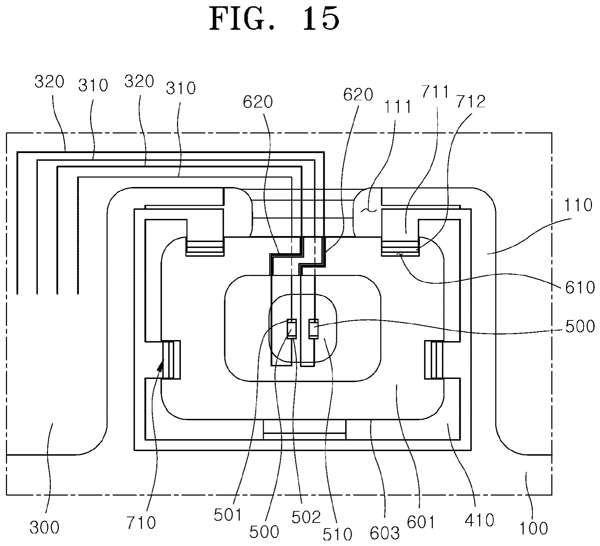

FIG. 15 is a view schematically showing an electrical connection structure of a temperature sensor according to another embodiment of the present disclosure.

Referring to FIG. 15, a plurality of temperature sensors 500 may be disposed on the first mounting surface 411 of the mounting portion 410 according to the present embodiment. Hereinafter, an example in which the number of temperature sensors 500 is two will be described, but it is also possible for the number of temperature sensors 500 to be three or more.

Since the first substrate 300 and the second substrate 400 include flexible circuit boards, when the plurality of temperature sensors 500 are disposed on the first mounting surface 411, there is a concern that paths of the first connecting wire 310 and the second connecting wire 320 of different temperature sensors 500 may overlap each other due to thickness limitations of the first substrate 300 and the second substrate 400.

The first protective member 600 according to the present embodiment may further include a bypass wire 620.

The bypass wire 620 may be connected to at least one of the first connecting wire 310 and the second connecting wire 320. The bypass wire 620 may function as a configuration that provides an electrical bypass path to at least one of the first connecting wire 310 and the second connecting wire 320 in the first protective member 600. Hereinafter, an example in which the bypass wire 620 is connected to the second connecting wire 320 will be described. However, the bypass wire 620 may be connected to the first connecting wire 310 and connected to both the first connecting wire 310 and the second connecting wire 320.

In the present embodiment, the first protective member 600 may be exemplified as a conventional printed circuit board (PCB). The bypass wire 620 according to the present embodiment may be exemplified as a conductive pattern formed inside the first protective member 600. The bypass wire 620 may be disposed at a position that is spaced a predetermined distance apart from the mounting portion 410 in the direction opposite to the first direction. Accordingly, a height of the bypass wire 620 may differ from heights of the first connecting wire 310 and the second connecting wire 320.

In the present embodiment, the second connecting wire 320 may discontinuously extend in the first substrate 300, the connecting portion 420, and the mounting portion 410 with the first protective member 600 as a boundary. That is, the second connecting wire 320 may have a form in which a side connected to the second terminal 502 and a side connected to an external circuit such as the BMS are disconnected from each other with the first protective member 600 as the boundary.

One side of the bypass wire 620 may be connected to one side of the second connecting wire 320 connected to the second terminal 502 and the other side of the bypass wire 620 may be connected to the other side of the second connecting wire 320 connected to the external circuit. The bypass wire 620 may be connected to the second connecting wire 320 by a connection via extending in the first protective member 600 in the first direction.

The bypass wire 620 may extend in a direction intersecting the first connecting wire 310 in the first protective member 600. Since the bypass wire 620 and the first connecting wire 310 are disposed at different heights, the bypass wire 620 and the first connecting wire 310 may form an independent electrical connection path without overlapping each other.

Accordingly, a detection signal input to the second terminal 502 or output from the second terminal 502 may be smoothly transmitted between one side and the other side of the second connecting wire 320, which are spaced apart from each other with the first protective member 600 as the boundary, through the bypass wire 620.

Hereinafter, a sensing module 4 according to still another embodiment of the present disclosure will be described.

The sensing module 4 according to the present embodiment may be configured to differ only in the detailed configuration of the stopper 720 from the sensing module 4 according to one or more embodiments of the present disclosure. Accordingly, in describing the sensing module 4 of the present embodiment, only the detailed configuration of the stopper 720, which differs from that of the sensing module 4 according to one or more embodiments of the present disclosure, will be described. The description of the sensing module 4 according to one or more embodiments of the present disclosure may be applied as is to the remaining configuration of the sensing module 4 according to the present embodiment.

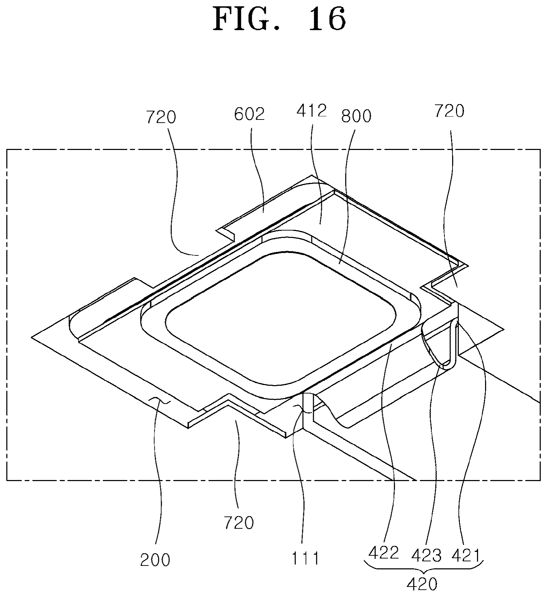

FIG. 16 is a view schematically showing a configuration of a stopper according to still another embodiment of the present disclosure.

Referring to FIG. 16, a plurality of stoppers 720 according to the present embodiment may be provided.

Each stopper 720 may individually extend from different inner surfaces of the partition wall 110. Each stopper 720 may come into contact with one of different positions of the second surface 602 of the first protective member 600 that extends outward from the mounting portion 410.

For example, as shown in FIG. 16, three stoppers 720 may be formed. One among the three stoppers 720 may be spaced apart from the connecting portion 420 and the entry hole 111 in the second direction and may come into contact with the second surface 602 protruding from the mounting portion 410 in the second direction.

The remaining pair of stoppers 720 among the three stoppers 720 may be disposed to be spaced apart from each other in the third direction with the connecting portion 420 interposed therebetween. The remaining pair of stoppers 720 among the three stoppers 720 may each come into contact with corner portions of the second surface 602 protruding in a direction parallel to the third direction from the mounting portion 410.

According to the present disclosure, the detection accuracy of a sensing module can be further improved by preventing a temperature sensor from being detached from the inside of a slot or a position of the temperature sensor from being changed.

According to the present disclosure, by constantly applying a pressing force to a first protective member in a direction toward a battery cell, a second protective member can be prevented from being separated from the battery cell or a second substrate can be prevented from being lifted.

According to the present disclosure, by relatively reducing an area of a connecting portion parallel to a first substrate, a component mounting area of the first substrate can be increased and the degree of freedom in circuit design of the first substrate can be increased.

According to the present disclosure, since a second surface of the first protective member comes into contact with a stopper, the first protective member can be prevented from being detached from the slot by a pressing force of a hook during an assembly process of a battery module.

According to the present disclosure, since the first protective member provides an electrical bypass path to the temperature sensor, overlapping between conductive patterns due to thickness limitations of the first substrate and second substrate can be prevented.

However, the effects obtainable through the present disclosure are not limited to the above effects, and other technical effects that are not mentioned will be clearly understood by those skilled in the art from the following description of the present disclosure.

The present disclosure is directed to providing a sensing module and a battery module including the same, which can stably fix a component and secure a space for circuit implementation.

While the present disclosure has been described with reference to embodiments shown in the drawings, these embodiments are merely illustrative and it should be understood that various modifications and equivalent other embodiments can be derived by those skilled in the art on the basis of the embodiments.

Therefore, the technical scope of the present disclosure should be defined by the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A sensing module, comprising:
a busbar holder;
a slot passing through the busbar holder in a first direction;
a first substrate on the busbar holder;
a second substrate extending from the first substrate toward the slot;
a temperature sensor connected to the second substrate;
a first protective member connected to the second substrate, the first protective member surrounding the temperature sensor; and
a support member supporting the first protective member inside the slot.

2. The sensing module as claimed in claim 1, wherein the second substrate comprises:
a mounting portion facing the first substrate in a second direction intersecting the first direction, the mounting portion being inserted into the slot; and
a connecting portion disposed between the first substrate and the mounting portion.

3. The sensing module as claimed in claim 2, wherein the connecting portion comprises:
a first end portion connected to the first substrate;
a second end portion spaced apart from the first end portion in the second direction, the second end portion being connected to the mounting portion; and
at least one bending portion between the first end portion and the second end portion.

4. The sensing module as claimed in claim 3, wherein the bending portion is bent around a third direction intersecting the first direction and the second direction.

5. The sensing module as claimed in any preceding claim, wherein:
the busbar holder comprises a partition wall surrounding the slot, and
the support member comprises a hook protruding from the partition wall toward the slot.

6. The sensing module as claimed in claim 5, wherein the busbar holder further comprises an entry hole passing through the partition wall in the second direction, the connecting portion being inside the entry hole.

7. The sensing module as claimed in claim 5 or 6, wherein the hook comprises:
a first hook body connected to the partition wall;
a second hook body extending from the first hook body, the second hook body being spaced apart from an inner surface of the partition wall; and
a pressing portion at an end portion of the second hook body, the pressing portion pressing the first protective member in the first direction.

8. The sensing module as claimed in claim 7, wherein a distance between the second hook body and the inner surface of the partition wall increases toward the pressing portion.

9. The sensing module as claimed in claim 7 or 8, wherein a distance between the pressing portion and the inner surface of the partition wall is greater than a distance between a perimetric surface of the first protective member and the inner surface of the partition wall.

10. The sensing module as claimed in claim 7, 8 or 9, wherein the first protective member comprises:
a first surface, the pressing portion being in contact with the first surface; and
a second surface spaced apart from the first surface in the first direction, the second surface facing the second substrate.

11. The sensing module as claimed in claim 10, wherein:
the first protective member further comprises a concave groove in the first surface in the first direction, and
the pressing portion is in the groove.

12. The sensing module as claimed in any one of claims 2 to 11, wherein:
the mounting portion comprises a first mounting surface and a second mounting surface spaced apart from each other in the first direction, and
the temperature sensor and the first protective member are on the first mounting surface.

13. The sensing module as claimed in claim 12, further comprising a second protective member on the second mounting surface, the second protective member supporting the mounting portion.

14. The sensing module as claimed in any preceding claim, further comprising:
a first connecting wire connected to a first terminal of the temperature sensor; and
a second connecting wire connected to a second terminal of the temperature sensor, and
wherein the first protective member comprises a bypass wire connected to at least one of the first connecting wire and the second connecting wire.

15. A battery module, comprising:
a housing;
a plurality of battery cells inside the housing; and
the sensing module of any preceding claim,
wherein the sensing module is inside the housing, with the busbar holder facing the battery cell, the sensing module collecting operation information of one or more of the plurality of battery cells.
